# EUROPEAN PATENT SPECIFICATION

(11) **EP 3 274 240 B1**
(45) Date of publication and mention of the grant of the patent: **14.12.2022**
(21) Application number: 16715639.7
(22) Date of filing: 22.03.2016
(51) Int. Cl.: B62D 3/12, B23P 15/14, B21K 1/76, B24B 5/22

(54) **RACK BAR AND METHOD FOR MANUFACTURING SAID RACK BAR**
ZAHNSTANGE UND VERFAHREN ZUR HERSTELLUNG DER ZAHNSTANGE
BARRE DE CRÉMAILLÈRE ET PROCÉDÉ DE FABRICATION DE LADITE BARRE DE CRÉMAILLÈRE

(30) Priority: 23.03.2015 JP 2015059793
(43) Date of publication of application: 31.01.2018
(73) Proprietor: Neturen Co., Ltd., Tokyo 141-8639 (JP)
(72) Inventor: YAMAWAKI, Takashi, Tokyo 141-8639 (JP); SUNAGA, Norimasa, Tokyo 141-8639 (JP)
(74) Representative: Zimmermann & Partner Patentanwälte mbB
(86) International application number: PCT/JP2016/001645
(87) International publication number: WO 2016/152146

(56) References cited:
- EP-A2- 1 132 277
- EP-A2- 1 177 966
- WO-A1-2006/066309
- WO-A1-2008/123654
- WO-A1-2014/104410
- JP-A- 2005 247 163
- US-A1- 2002 044 439
- US-A1- 2014 060 956

## Description

### Technical Field

The present invention relates to a rack bar for use in, for example, a rack-and-pinion steering device of a vehicle and to a method for manufacturing the rack bar.

### Background Art

A rack bar manufacturing method according to the preamble of claim 1 is known from JP 2005 247163 A.

Rack bars for use in rack-and-pinion steering devices and the like are manufactured by forming a plurality of rack teeth on a portion of a rod member along the longitudinal direction of the rod member. The rack teeth may be formed by cutting or forging (see, e.g., JPH3-138042A). Forging method is higher in productivity than cutting and, in addition, can produce variable-pitch rack teeth.

Hollow rack bars are also known as a light weight alternative, using a pipe member instead of a solid rod member (see, e.g., JP2004-351468A). A hollow rack bar is formed by providing a flat surface on a portion of a pipe member along the longitudinal direction of the pipe member, pressing a teeth die against the flat surface, and inserting a mandrel into the pipe member in this state. By inserting the mandrel into the pipe member, the pipe wall where the flat surface is provided is pressed by the mandrel such that it enters the teeth die, whereby the rack teeth are formed.

There are also rack bars for use in dual-pinion electromotive power steering devices. This rack bar is manufactured by coaxially joining a rod member against one end of a pipe member formed with rack teeth by pressure welding and then forming rack teeth on the joined rod member by cutting (see, e.g., JP2014-124767A).

In steering devices, an outer surface of a toothed section of a rack bar on a side opposite to a side where rack teeth are formed is supported by a rack guide in a slidable manner, and the toothed section is pressed against a pinion gear by a spring that biases the rack guide.

The toothed section of the rack bar, where the rack teeth are formed by a plastic working such as forging or pressing using a mandrel, may have not have a good shape accuracy such as straightness and outer diameter due to residual working strain. The shape accuracy of the toothed section that is slidably supported by a rack guide affects the operation of the steering device. Therefore, improvement in the shape accuracy of the toothed section is desired.

With a demand of downsizing of steering devices, there is a tendency that rack bars are made shorter, that is, a shaft section of the rack bar adjacent to its toothed section is shortened. This makes it difficult to perform centering using only the shaft section, not including the toothed section having which is low in shape accuracy, in cases where a shaft member is joined to another shaft member formed with rack teeth like in dual-pinion rack bars, which may result in lowering of accuracy of joining the shaft members.

To improve the joining accuracy, the shaft member to be joined to the shaft member formed with rack teeth may be provided to have a larger diameter than the shaft member formed with the rack teeth, and after the joining, cutting may be performed to conform to the shaft member formed with the rack teeth. However, this will increase cost because of the time needed for the cutting and waste of material used.

### Summary

Illustrative aspects of the present invention provide a rack bar having an improved shape accuracy.

According to an illustrative aspect of the present invention, a rack bar includes a shaft member having a plastically formed toothed section. The toothed section has a plurality of rack teeth, and extends over a portion of an entire length of the shaft member along a longitudinal direction of the shaft member. The shaft member has a grinding-finished outer peripheral surface extending over the entire length of the shaft member including the toothed section.

According to another illustrative aspect of the present invention, a method for manufacturing a rack bar is provided. The method includes forming a toothed section having a plurality of rack teeth on a shaft member by a plastic working over a portion of an entire length of the shaft member along a longitudinal direction of the shaft member, and grinding an outer peripheral surface of the shaft member over the entire length of the shaft member including the toothed section.

Other aspects and advantages of the invention will be apparent from the following description, the drawings and the claims.

### Brief Description of Drawings

[fig.1]Fig. 1 is a sectional view of a rack bar according to the present invention.
[fig.2A]Fig. 2A is a sectional view illustrating an example a method of manufacturing the rack bar of Fig. 1.
[fig.2B]Fig. 2B is another sectional view illustrating the example of the method.
[fig.2C]Fig. 2C is another sectional view illustrating the example of the method.
[fig.3]Fig. 3 is a diagram illustrating an example of grinding in manufacturing the rack bar of Fig. 1.
[fig.4]Fig. 4 is a sectional view illustrating a grinding margin of the rack bar of Fig. 1.
[fig.5]Fig. 5 is a sectional view of a rack bar according to another version of the present invention.
[fig. 6]Fig. 6 is a plan view of a rack bar according to another embodiment of the present invention.
[fig.7A]Fig. 7A is a diagram illustrating an example of a method of manufacturing the rack bar of Fig.6.
[fig.7B]Fig. 7B is another diagram illustrating the example of the method of manufacturing the rack bar of Fig.6.
[fig.7C]Fig. 7C is another diagram illustrating the example of the method of manufacturing the rack bar of Fig.6.
[fig.8]Fig. 8 is a plan view of a rack bar according to another version of the present invention.
[fig.9]Fig. 9 is a plan view of a rack bar according to another version of the present invention.

### Description of Embodiments

Hereinafter, embodiments of the present invention will be described in detail with reference to the drawings.

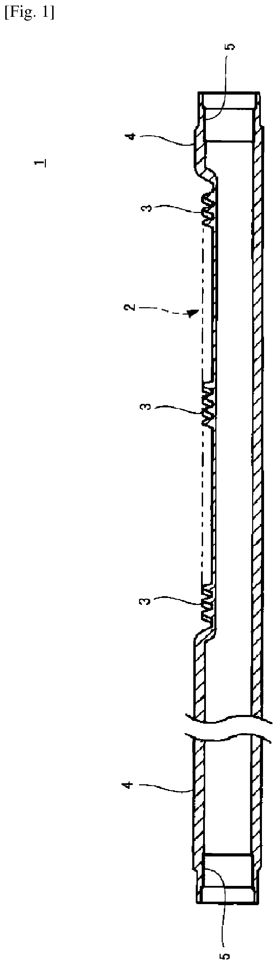

Fig. 1 illustrates a rack bar 1 according to the present invention.

The rack bar 1 is a hollow rack bar that is formed from a circular-pipe-shaped shaft member, and has a toothed section 2 which is formed with a plurality of rack teeth 3 and shaft sections 4 which exist on the two respective sides of the toothed section 2 in the longitudinal direction of the shaft member. An inner circumferential surface of each of the shaft sections 4 is formed with a threaded portion 5 to be used for connection to a ball joint in a steering device.

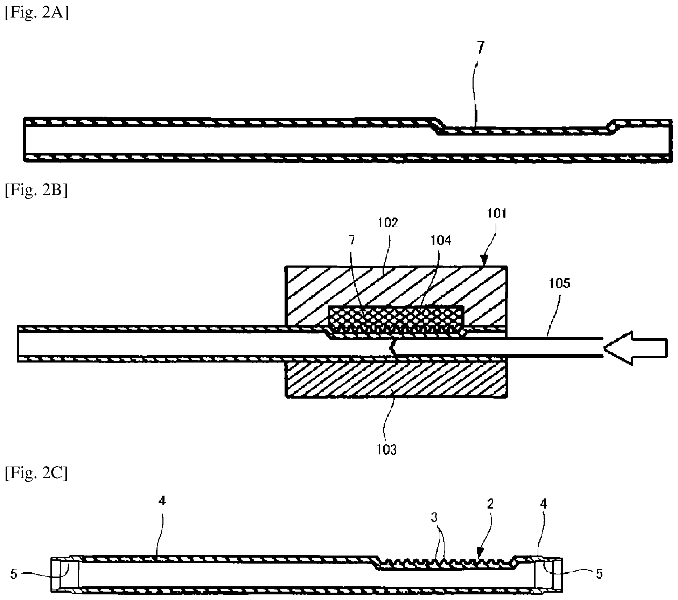

Figs. 2A to 3 illustrate an example of a method of manufacturing the hollow rack bar 1.

A shaft member from which the hollow rack bar 1 is formed is, for example, a steel pipe that is made of carbon steel such as S45C and is an approximately uniform in thickness. First, a flat teeth forming surface 7 is formed preliminarily in a portion (hereinafter, a teeth forming portion) that extends in the longitudinal direction of the shaft member and is to become the toothed section 2. For example, the teeth forming surface 7 is formed by press forming of crushing the teeth forming portion of the shaft member using a forming die (see Fig. 2A).

Then the shaft member is placed in a forming die 101. The forming die 101 includes a top die 102, a bottom die 103, and a teeth die 104, and is constructed so as to surround the teeth forming portion of the shaft member over its entire circumference. The teeth die 104 is pressed against the teeth forming surface 7 of the shaft member.

Then a mandrel 105 is inserted into the shaft member placed in the forming die 101. The pipe wall of the shaft member providing the teeth forming surface 7 is pressed by the inserted mandrel 105 from its inner surface side, and enters the teeth die 104 that is pressed against the teeth forming surface 7. This plastic working is performed repeatedly using gradually larger mandrels 105, whereby a plurality of rack teeth 3 that conforms to the shape of the teeth die 104 is formed. At the same time, the outer peripheral surface, other than the teeth forming surface 7, of the teeth forming portion is shaped so as to have an arc-shaped cross section that conforms to the shape of the bottom die 103 (see Fig. 2B).

The rack teeth 3 are formed by, for example, cold plastic working which is superior in formation accuracy. Alternatively, the rack teeth 3 may be formed by warm (generally 600°C to 900°C) or hot (generally higher than 900°C) working in which the amount of deformation of the pipe wall per operation can be made large. It is also possible to perform a warm or hot plastic working in at initial stage and cold plastic working at a later stage.

Then threaded portions 5 are formed in end portions of the shaft sections 4 of the shaft member, respectively, by lathe working, for example (see Fig. 2C).

Subsequently, to increase the durability of the rack teeth 3 to mesh with a pinion gear and the toothed section 2 to slide on a rack guide in a steering device, the toothed section 2 is subjected to surface treatment such as quenching or shot peening, whereby a bend of the shaft member produced by plastic working, such as the press forming for preliminary formation of the teeth forming surface 7 and the formation of the rack teeth 3 using the mandrels, and quenching is corrected

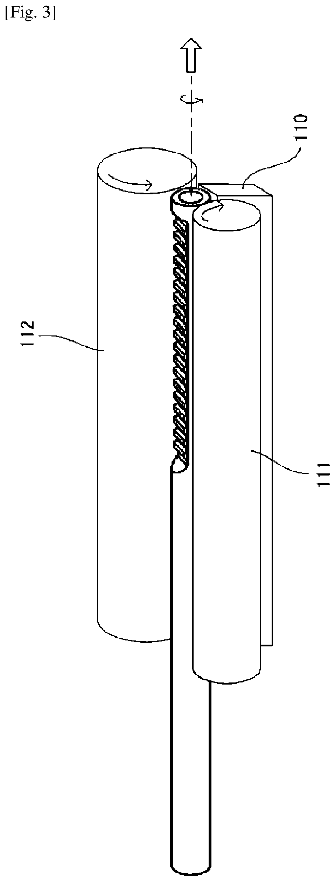

Then, as shown in Fig. 3, grinding is performed on the outer peripheral surface of the shaft member over its entire length in the longitudinal direction (toothed section 2 included). In the illustrated example, the grinding is centerless grinding. The shaft member is supported by a support blade 110 from below in the vertical direction, and sandwiched between an adjustment wheel 111 which is disposed on one side of the support blade 110 and extends parallel with the support blade 110 and a grindstone 112 which is disposed on the opposite side of the support blade 110 to the adjustment wheel 111 and extends parallel with the support blade 110. The shaft member is fed in the longitudinal direction while being rotated by rotation of the adjustment wheel 111, whereby its outer peripheral surface is ground. As a result of the grinding, the shaft member is shaped so as to have a prescribed outer diameter over its entire length in the longitudinal direction (toothed section 2 included).

The grinding to be performed on the outer peripheral surface of the shaft member is not limited to centerless grinding, and may be, for example, cylindrical grinding in which a grindstone is moved in the longitudinal direction of the shaft member while the shaft member supported at both ends is rotated about its center axis.

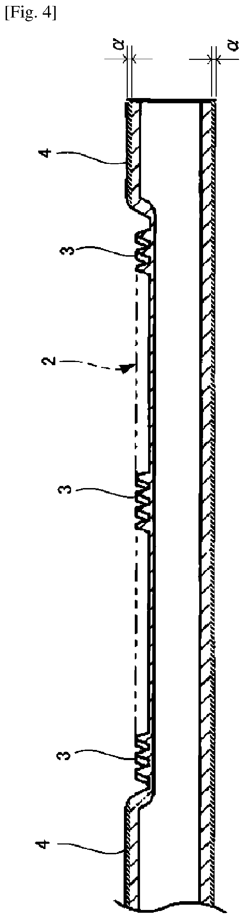

Since the shaft member including the toothed section 2 is to be subjected to the grinding over its entire length in the longitudinal direction, as shown in Fig. 4 the outer peripheral surface, shaped so as to have an arc-shaped cross section by the plastic working using the mandrels, of the teeth forming portion is formed to have an outer diameter that includes a grinding margin a (hatched portion in Fig. 4) to be removed by the grinding and is larger than one to be obtained after the grinding.

According to the hollow rack bar 1 is manufactured in the manner described above, since the toothed section 2 is subjected to grinding, working strain produced by the plastic working such as the press forming for preliminary formation of the teeth forming surface 7 and the formation of the rack teeth 3 using mandrels and quenching strain are removed, whereby the toothed section 2 is improved in shape accuracy such as straightness and outer diameter.

Furthermore, since grinding is performed on the shaft member including the toothed section 2 thoroughly over its entire length in the longitudinal direction, the rack teeth 3 can be increased in shape accuracy such as straightness and outer diameter with respect to the shaft sections 4 on respective sides of the toothed section 2.

While the hollow rack bar 1 has been described above as an example, the present invention is also applicable to solid rack bars.

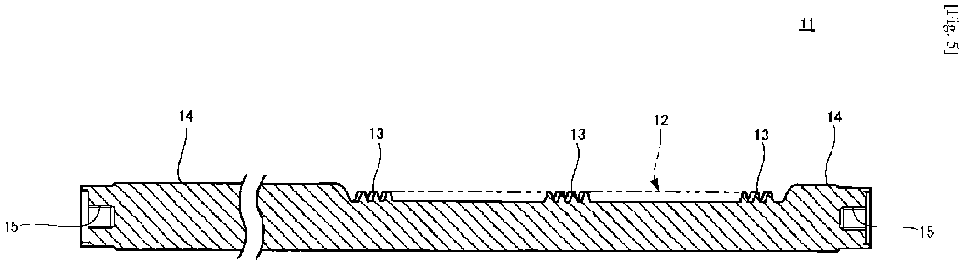

A solid rack bar 11 shown in Fig. 5 is formed from a rod-like shaft member having a circular cross section. Like the above-described hollow rack bar 1, the hollow rack bar 1 has a toothed section 12 which is formed with a plurality of rack teeth 13 and shaft sections 14 which exist on the two respective sides of the toothed section 12 in the longitudinal direction of the shaft member. An end portion of each of the shaft sections 14 is formed with a threaded portion 15 to be used for connection to a ball joint in a steering device.

To manufacture the solid rack bar 11, the rack teeth 13 are formed in a teeth forming surface of a shaft member by forging that uses a forming die that surrounds a teeth forming portion of the shaft member over its entire circumference and has a teeth die to be pressed against the teeth forming surface. At the same time, the outer peripheral surface of the teeth forming portion is shaped so as to have an arc-shaped cross section that conforms to the shape of the forming die.

Then threaded portions 15 are formed in end portions of the shaft sections 14 of the shaft member, respectively, by lathe working, for example. Subsequently, as in the case of the above-described rack bar 1, the toothed section 12 is subjected to surface treatment such as quenching or shot peening, whereby a bend of the shaft member produced by the forging for formation of the rack teeth and quenching is corrected.

Then grinding is performed on the outer peripheral surface of the shaft member over its entire length in the longitudinal direction (toothed section 12 included), whereby the shaft member is shaped so as to have a prescribed outer diameter over its entire length in the longitudinal direction (toothed section 12 included). Since the shaft member including the toothed section 12 is to be subjected to the grinding over its entire length in the longitudinal direction, the outer peripheral surface, shaped so as to have an arc-shaped cross section by the above-described forging, of the teeth forming portion is shaped so as to have an outer diameter that includes a grinding margin to be removed by the grinding and is larger than one to be obtained after the grinding.

The solid rack bar 11 is manufactured in the above-described manner. In the solid rack bar 11 manufactured in the above-described manner, since the toothed section 12 is subjected to grinding, working strain produced by the forging (plastic working) for formation of the rack teeth 13 and quenching strain are eliminated, whereby the toothed section 12 is increased in shape accuracy such as straightness and outer diameter.

Furthermore, since grinding is performed on the shaft member including the toothed section 12 thoroughly over its entire length in the longitudinal direction, the toothed section 12 can be increased in shape accuracy such as straightness and outer diameter with respect to the shaft sections 14 which are located on the two respective sides of the toothed section 12.

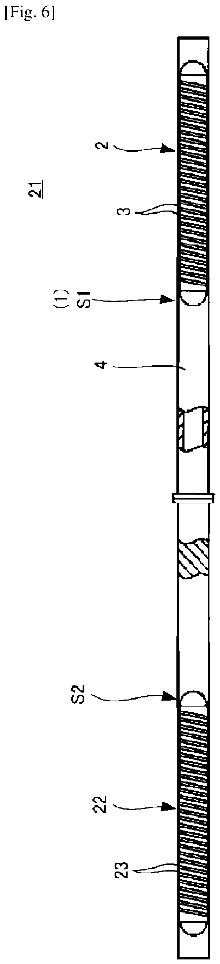

Fig. 6 illustrates a rack bar 21 according to another example of the present invention. The rack bar 21 includes the rack bar 1 of Fig. 1.

The rack bar 21 is configured to be used in a dual pinion electric power steering device. The rack bar 21 includes a shaft member S1 (the hollow rack bar 1) and a rodshaped extension shaft member S2 having a circular cross section and joined to the end of one of the shaft sections 4 of the shaft member S1 coaxially with the shaft member S1. Like the shaft member S1, the extension shaft member S2 has a toothed section 22 having a plurality of rack teeth 23.

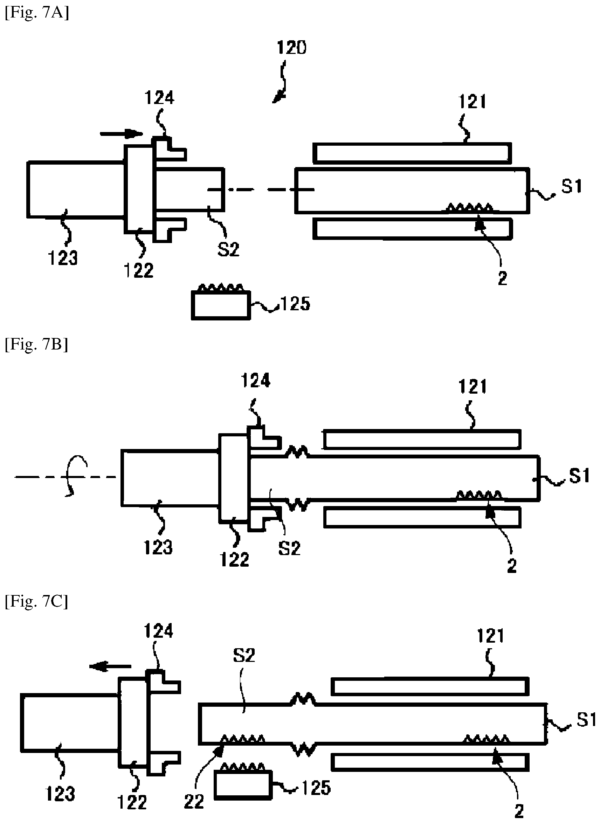

Figs. 7A to 7C illustrate an example of a method of manufacturing the rack bar 21.

A manufacturing machine 120 for the rack bar 21 is equipped with a clamp mechanism 121 which is fixed to a floor or the like, a drive unit 123 for driving a rotary table 122 rotationally, a chuck mechanism 124 which is attached to the rotary table 122, and a working device 125 such as a broaching machine.

A toothed section 2 having the rack teeth 3 has been formed in a shaft member S1 in advance, and grinding has been performed on the outer peripheral surface of the shaft member S1 including the toothed section 2 over its entire length in the longitudinal direction. The shaft member S1 is held by the clamp mechanism 121. The extension shaft member S2 is held by the chuck mechanism 124. No toothed section 22 has been formed in the extension shaft member S2 in advance, and a toothed section 22 is formed in the extension shaft member S2 by the working device 125 after it is joined to the shaft member S1.

The clamp mechanism 121 and the chuck mechanism 124 are constructed so as to support the shaft member S1 and the extension shaft member S2 such that their center axes coincide with each other. Since as described above the shaft member S1 which has been subjected to grinding has been increased in shape accuracy, it can be centered with respect to the clamp mechanism 121 using a sufficiently long portion including the toothed section 2. As a result, the shaft member S1 and the extension shaft member S2 are arranged coaxially with each other with high accuracy.

Then the extension shaft member S2 which is held by the chuck mechanism 124 is moved toward the shaft member S1 which is held by the clamp mechanism 121, and the ends of the shaft member S1 and the extension shaft member S2 come into contact with each other (see Fig. 7A).

The drive unit 123 is then activated, whereby the extension shaft member S2 is rotated about its center axis. The shaft member S1 and the extension shaft member S2 are joined to each other because their respective end portions are changed in metallographic structure due to frictional heat generated by relative rotation between the end surfaces, being in contact with each other, of the shaft member S1 and the extension shaft member S2 and, in addition, receive pressure (see Fig. 7B).

After the joining of the shaft member S1 and the extension shaft member S2, the holding of the extension shaft member S2 by the chuck mechanism 124 is canceled and a toothed section 22 having the rack teeth 23 is formed in the extension shaft member S2 by the working device 125 (see Fig. 7C).

The rack bar 21 is manufactured in the above-described manner. In the solid rack bar 21 manufactured in the above-described manner, since the shaft member S1 has been increased in shape accuracy because grinding has been performed, over its entire length, on the shaft member S1 already formed with the toothed section 2, the shaft member S1 and the extension shaft member S2 can be arranged coaxially with each other with high accuracy. The use of the shaft member S1 and the extension shaft member S2 having the same outer diameter makes it unnecessary to cut the extension shaft member S2 after the joining. As a result, no time and labor for cutting are necessary and no waste of material occurs, leading to cost reduction.

In the above example, the toothed section 22 is formed in the extension shaft member S2 after it is joined to the shaft member S1. An alternative manufacturing method is possible in which the toothed section 22 is formed in the extension shaft member S2 in advance and, in the above-described frictional pressure welding, the drive unit 123 is stopped suddenly when the angle, around the center axis of the shaft member S1 and the extension shaft member S2, of the toothed section 22 of the extension shaft member S2 with respect to the toothed section 2 of the shaft member S1 has a desired value.

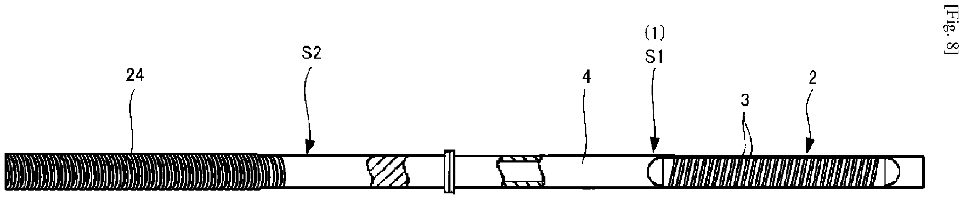

Furthermore, although in the above example the extension shaft member S2 is formed with the toothed section 22 having the rack teeth 23, what is formed in the toothed section 22 is not limited to rack teeth and may be, for example, a ball screw 24 (see Fig. 8).

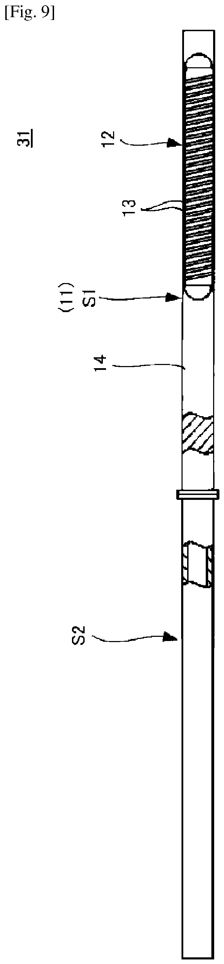

Fig. 9 illustrates a rack bar 31 according to another example of the present invention. The rack bar 31 includes the solid rack bar 11 of Fig. 5.

The rack bar 31 includes the shaft member S1 (the solid rack bar 11) and a circular-pipe-shaped extension shaft member S2 joined to the end of one of the shaft sections 14 of the shaft member S1 coaxially with the shaft member S1. The rack bar 31 is thus lighter than a rack bar that is formed from a rod-like shaft member in its entirety and having the same length as the former. As in the case of the above-described rack bar 21, the shaft member S1 and the extension shaft member S2 are jointed each other by frictional pressure welding.

Also in the rack bar 31, since the shaft member S1 has been increased in shape accuracy because grinding has been performed, over its entire length, on the shaft member S1 already formed with the toothed section 12, the shaft member S1 and the extension shaft member S2 can be arranged coaxially with each other with high accuracy. The use of the shaft member S1 and the extension shaft member S2 having the same outer diameter makes it unnecessary to cut the extension shaft member S2 after the joining. As a result, no time and labor for cutting are necessary and no waste of material occurs, leading to cost reduction.

## Claims

1. A method for manufacturing a rack bar (21), comprising:
forging a toothed section (2) having a plurality of rack teeth (3) by a plastic working over a portion of an entire length of a shaft member (S1) along a longitudinal direction of the shaft member (S1) and simultaneously forging the toothed section (2) with an outer peripheral surface having an arc-shaped cross section; and
joining an extension shaft member (S2) to one end of the shaft member (S1) coaxially with the shaft member (S1),
**characterized by** further comprising:
in the plastic working, forming the outer peripheral surface of the toothed section (2) to have an outer diameter that includes a grinding margin; and
before the joining, grinding the outer peripheral surface of the shaft member (S1) over the entire length of the shaft member (S1) including the toothed section (2) so that the shaft member (S1) is shaped so as to have a prescribed outer diameter over the entire length of the shaft member (S1) including the toothed section (2),
wherein the grinding margin is to be removed by the grinding, and the outer diameter including the grinding margin is larger than the prescribed outer diameter.

2. The method according to claim 1, wherein the grinding comprises grinding the outer peripheral surface of the shaft member (S1) to have a same outer diameter as the extension shaft member (S2).

## Patentansprüche

1. Verfahren zum Herstellen einer Zahnstange (21), umfassend:
Schmieden eines gezahnten Abschnitts (2) mit einer Vielzahl von Zahnstangenzähnen (3) durch eine plastische Bearbeitung über einem Teil einer Gesamtlänge eines Schaftteils (S1) entlang einer Längsrichtung des Schaftteils (S1), und gleichzeitig Schmieden des gezahnten Abschnitts (2) mit einer Außenumfangsfläche, die einen bogenförmigen Querschnitt hat; und
Anfügen eines Erweiterungsschaftteils (S2) an ein Ende des Schaftteils (S1) koaxial mit dem Schaftteil (S1),
**dadurch gekennzeichnet, dass** es darüber hinaus umfasst:
in der plastischen Bearbeitung, Ausbilden der Außenumfangsfläche des gezahnten Abschnitts (2) so, dass er einen Außendurchmesser hat, der einen Schleifspielraum aufweist; und
vor dem Anfügen, Schleifen der Außenumfangsfläche des Schaftteils (S1) über die Gesamtlänge des Schaftteils (S1) einschließlich des gezahnten Abschnitts (2) so, dass das Schaftteil (S1) so geformt wird, dass es einen vorgeschriebenen Außendurchmesser über die Gesamtlänge des Schaftteils (S1) einschließlich des gezahnten Abschnitts (2) hat,
wobei der Schleifspielraum durch das Schleifen entfernt werden soll und der Außendurchmesser einschließlich des Schleifspielraums größer ist als der vorgeschriebene Außendurchmesser.

2. Verfahren nach Anspruch 1, wobei das Schleifen umfasst, die Außenumfangsfläche des Schaftteils (S1) so zu schleifen, dass es denselben Außendurchmesser hat wie das Erweiterungsschaftteil (S2).

## Revendications

1. Procédé de fabrication d'une barre de crémaillère (21), comprenant :
le forgeage d'une section dentée (2) présentant une pluralité de dents de barre (3) par usinage plastique sur une partie d'une longueur entière d'une partie de tige (S1) le long d'une direction longitudinale de la partie de tige (S1) et le forgeage simultané de la section dentée (2) avec une surface périphérique extérieure présentant une section transversale en forme d'arc ; et
l'assemblage d'une partie de tige d'extension (S2) avec une extrémité de la partie de tige (S1) coaxialement par rapport à la partie de tige (S1),
**caractérisé en ce qu'**il comprend en outre :
lors de l'usinage plastique, la formation de la surface périphérique extérieure de la section dentée (2) pour qu'elle ait un diamètre extérieur qui inclut une marge de meulage ; et
avant l'assemblage, le meulage de la surface périphérique extérieure de la partie de tige (S1) sur la longueur entière de la partie de tige (S1) incluant la section dentée (2) de telle sorte que la partie de tige (S1) soit formé de manière à avoir un diamètre extérieur prescrit sur la longueur entière de la partie de tige (S1) incluant la section dentée (2),
sachant que la marge de meulage doit être enlevée par le meulage, et le diamètre extérieur incluant la marge de meulage est supérieur au diamètre extérieur prescrit.

2. Le procédé selon la revendication 1, sachant que le meulage comprend le meulage de la surface périphérique extérieure de la partie de tige (S1) pour qu'elle ait un même diamètre extérieur que la partie de tige d'extension (S2).
